# EUROPÄISCHE PATENTSCHRIFT

(11) **EP 1 121 513 B1**
(45) Veröffentlichungstag und Bekanntmachung des Hinweises auf die Patenterteilung: **03.04.2002**
(21) Anmeldenummer: 99948894.3
(22) Anmeldetag: 29.09.1999
(51) Int. Cl.: F01N 11/00, F01N 3/08, F01N 3/20, F02D 41/00

(54) **VERFAHREN ZUR STICKOXIDREDUZIERUNG IM ABGAS EINER MAGER BETRIEBENEN BRENNKRAFTMASCHINE**
METHOD FOR REDUCING NITROGEN OXIDE IN THE EXHAUST GASES OF AN INTERNAL COMBUSTION ENGINE OPERATED WITH A LEAN MIXTURE
PROCEDE DE REDUCTION DES OXYDES D'AZOTE DANS LES GAZ D'ECHAPPEMENT D'UN MOTEUR A COMBUSTION INTERNE FONCTIONNANT AVEC UN MELANGE PAUVRE

(30) Priorität: 16.10.1998 DE 19847874
(43) Veröffentlichungstag der Anmeldung: 08.08.2001
(73) Patentinhaber: Volkswagen Aktiengesellschaft, 38436 Wolfsburg (DE)
(72) Erfinder: POTT, Ekkehard, D-38518 Gifhorn (DE); SPLISTESER, Gunnar, D-38442 Wolfsburg (DE)
(86) Internationale Anmeldenummer: EP9907213
(87) Internationale Veröffentlichungsnummer: WO0023694

(56) Entgegenhaltungen:
- EP-A- 0 636 770
- EP-A1- 0 856 645
- EP-A1- 0 867 603
- EP-A2- 0 839 996
- WO-A1-98/45586
- DE-C- 19 716 275
- GB-A- 2 307 311
- US-A- 5 404 719
- US-A- 5 544 482
- US-A- 5 595 060
- US-A- 5 771 685

## Beschreibung

Die vorliegende Erfindung betrifft ein Verfahren zur Stickoxidreduzierung im Abgas einer mager betriebenen Brennkraftmaschine mit einem nachgeschalteten NOₓ-Speicher oder NOx-Speicherkatalysator. Sie betrifft insbesondere ein Verfahren zur optimalen Steuerung der NOₓ-Regeneration des NOₓ-Speicherkatalysators und ein Verfahren zur Verbesserung der Stickoxideinlagerung. Sie betrifft zudem einen Common-Rail-Dieselmotor und eine Abgasreinigungsvorrichtung zur Durchführung des Verfahrens.

NOx-Speicherkatalysatoren bestehen aus einer üblichen 3-Wege-Beschichtung, die um eine NOₓ-Speicherkomponente erweitert wird. Sie lagern Stickoxide durch Nitratbildung im mageren Abgas ein und setzen diese unter reduzierenden Bedingungen im fetten Abgas in unschädliches N₂ um, wobei sie gezielt entleert werden, um im wesentlichen ihre volle Absorotionsfähigkeit für Stickoxide zurückzuerhalten, die mit zunehmender Stickoxidbeladung in der Magerphase kontinuierlich absinkt.

Zur Minimierung der Stickoxidemission ist daher sowohl eine möglichst effektive Einlagerung der Stickoxide in den Katalysator als auch eine rechtzeitige und wirkungsvolle Regeneration des beladenen Katalysators durch intermittierendes Absenken des Lambda-Wertes in den fetten Betriebsbereich erforderlich.

Besondere Probleme treten hierbei bei Dieselmotoren auf, da diese üblicherweise nicht mit λ < 1 laufen. Bei dieser Art von Brennkraftmaschinen sind daher besondere motorische Maßnahmen (wie u.a. eine Androsselung ohne Drehmomenteneinbruch) zur NOₓ-Regeneration erforderlich, die zu einer unerwünschten Veränderung des Fahrverhaltens führen können. Zudem ist bei dieseltypischen Abgastemperaturen von unter 200°C eine NOₓ-Regeneration nicht möglich. Außerdem ist nur eine unzureichende NOₓ-Einlagerung festzustellen. Überdies verursachen auch hohe Abgasmassenströme Probleme bei der NOₓ-Speichereffizienz.

Zur Stickoxidreduzierung im Abgas einer mager betriebenen Brennkraftmaschine wird in der DE 197 16 275 C1 ein Steuerungsverfahren für die NOₓ-Regeneration eines zugeordneten NOₓ-Speicherkatalysators beschrieben. Bei diesem Verfahren wird zunächst der Beladungszustand des Katalysators bestimmt und mit einem vorbestimmten Schwellenwert verglichen. Bei Überschreitung dieses Wertes wird geprüft, ob die Betriebsbedingungen und die Fahrsituation eine NOₓ-Regeneration zulassen. Wenn dies der Fall ist, wird die erforderliche. Regeneration eingeleitet, während andernfalls so lange damit gewartet wird, bis die Betriebsbedingungen und die Fahrsituation dies erlauben oder ein zweiter Schwellenwert für die Stickoxidbeladung des Katalysators überschritten wird. Nun wird durch gezielte Veränderung der Betriebsbedingungen eine Regeneration eingeleitet und so lange durchgeführt, bis der Beladungszustand des Katalysators den ersten Schwellenwert unterschreitet. Falls die Fahrsituation dies jedoch nicht erlaubt, unterbleibt die Einleitung der Regeneration oder eine bereits begonnene Regeneration wird vorzeitig abgebrochen, um zu gewährleisten, daß keine gefährlichen Betriebssituationen eintreten können. Ein abgebrochener Regenerationsvorgang wird erst dann wieder aufgenommen, wenn auf Grund der aktuellen Fahrsituation keine Bedenken gegen die Durchführung einer solchen Maßnahme mehr bestehen. Eine OBD-Kontrolle des NOₓ-Speicherkatalysators zur Feststellung eventueller Unregelmäßigkeiten der Katalysatoraktivität und eine Überprüfung der ordnungsgemäßen Funktionsweise sicherheitsrelevanter Bauteile ist nicht vorgesehen. Der genannten Patentanmeldung sind auch keinerlei Maßnahmen zur Verbesserung der NOₓ-Einlagerung zu entnehmen.

Die GB 2 307 311 A offenbart ein Verfahren und eine Vorrichtung zum Betreiben einer Brennkraftmaschine mit einem nachgeschalteten NOₓ-Speicherkatalysator, der bei Überschreitung eines bestimmten Schwellenwertes für die Stickoxidbeladung durch Einstellung fetter Betriebsbedingungen automatisch regeneriert wird. Die Überschreitung dieses Schwellenwertes wird anhand der Überschreitung eines Schwellenwertes für die NOₓ-Konzentration des aus dem NOₓ-Speicherkatalysator ausströmenden Abgases bestimmt, die mittels eines nachgeschalteten NOₓ-Sensors erfasst wird.

Die US 5 404 719 A offenbart eine Abgasreinigungsvorrichtung mit einem einer mager betreibbaren Brennkraftmaschine nachgeschalteten NOₓ-Speicher und einer zugeordneten Steuerungseinrichtung zum Betreiben des NOₓ-Speichers in einem vorbestimmten Temperaturbereich, in dem der NOₓ-Speicher eine optimale NOₓ-Speicherfähigkeit besitzt. Die Speichertemperatur wird hierbei über die Temperatur des ihn durchstömenden Abgases gesteuert, die durch eine vorgeschaltete Heiz- bzw. Kühleinrichtung geeignet eingestellt wird. Diese Einrichtungen umfassen eine Kraftstoff-Einspritzeinrichtung zum Einspritzen von Kraftstoff bzw. eine Einrichtung zum Einleiten von Kühlluft in das in den NOₓ-Speicher einstömende Abgas.

Das Betreiben einer einem Verbrennungsmotor nachgeschalteten Stickoxidfalle in einem ihrem optimalen Wirkungsgrad entsprechenden Temperaturbereich durch Steuerung der Abgastemperatur ist auch aus der EP 0 856 645 A1 bekannt. Die Einstellung der Abgastemperatur erfolgt hierbei durch bedarfsgerechtes selektives Führen des Abgases über zwei unterschiedliche Abgaswege mit unterschiedlichen Wärmeverlusten. Der Stickoxidfalle kann auch ein Dreiwegekatalysator vorgeschaltet sein, wobei die Abgastemperatur so gesteuert wird, dass die Stickoxidfalle bei magerer und der Dreiwegekatalysator bei stöchiometrischer oder fetter Betriebsweise des Verbrennungsmotors mit ihrem optimalen Wirkungsgrad betrieben werden.

Ein entsprechendes Steuerungsverfahren ist auch aus der EP 0 867 603 A1 bekannt, wobei die unterschiedlichen Wärmeverluste auf den Abgaswegen einfach durch unterschiedliche Weglängen erzeugt werden.

Die Aufgabe der vorliegenden Erfindung besteht in der Schaffung eines Verfahrens zur Stickoxidreduzierung im Abgas einer mager betriebenen Brennkraftmaschine mit einem nachgeschalteten NOₓ-Speicherkatalysator, das sowohl eine möglichst effektive Einlagerung der freiwerdenden Stickoxide in den Katalysator ermöglicht als auch durch Verbesserung des beschriebenen NOₓ-Regenerationsverfahrens eine für eine .ordnungsgemäße Funktionsweise des Katalysators stets ausreichend hohe Katalysatoraktivität gewährleistet, ohne daß es hierbei zu einer spürbaren Veränderung des Betriebsverhaltens der Brennkraftmaschine oder gar zu gefährlichen Fahrsituationen kommt. Die Aufgabe besteht auch in der Schaffung eines Common-Rail-Dieselmotors. und einer Abgasreinigungsvorrichtung zur Durchführung dieses Verfahrens.

Die angestrebte Verbesserung der Katalysatorregeneration wird erfindungsgemäß durch das Verfahren gemäß Anspruch 1 erreicht .

Bei diesem erfindungsgemäßen NOₓ-Regenerationsverfahren wird in einem ersten Verfahrensschritt (Verfahrensschritt a) der Beladungszustand des NOₓ-Speicherkatalysators mit Stickoxiden bestimmt und mit einer einer gerade noch zulässigen minimalen Katalysatoraktivität entsprechenden vorbestimmten maximal zulässigen Stickoxidbeladung verglichen, um den optimalen Zeitpunkt zur Durchführung einer Regeneration zu ermitteln.

Zur Feststellung einer Unregelmäßigkeit der Katalysatoraktivität erfolgt zudem eine OBD-Kontrolle (OBD = On-Board-Diagnose) des NOₓ-Speicherkatalysators (Verfahrensschritt b.).

Bei Feststellung einer Unregelmäßigkeit oder bei Überschreitung der zulässigen Katalysatorbeladung erfolgt dann zunächst eine Überprüfung der Zulässigkeit einer NOₓ-Regeneration, um unerwünschte oder gar gefährliche Betriebsbedingungen oder Fahrsituationen zu vermeiden. Hierbei werden sicherheitsrelevante Bauteile auf ordnungsgemäße Funktionsweise *und* die aktuelle Fahrsituation auf Einhaltung vorbestimmter Fahrparameter überprüft (Verfahrensschritt c).

Gleichzeitig mit der Zulässigkeitsüberprüfung oder im Anschluß daran erfolgt in einem weiteren Verfahrensschritt (Verfahrensschritt d) eine Überprüfung, ob durch Einhaltung vorbestimmter Regenerationsparameter aktuellerweise eine Möglichkeit zur Durchführung einer NOx-Regeneration gegeben ist.

Gegebenenfalls werden die erforderlichen Regenerationsparameter eingestellt und die Regeneration wird eingeleitet. Ansonsten erfolgt eine Wiederholung des Verfahrensschrittes c.) bis zur Zulässigkeit einer NOₓ-Regeneration. Gegebenenfalls wird auch eine die Durchführung einer Regeneration behindernde festgestellte Funktionsstörung eines der sicherheitsrelevanten Bauteile angezeigt.

Wenn die NOx-Regeneration sowohl zulässig als auch möglich ist, wird der NOₓ-Speicherkatalysator schließlich in einem letzten Verfahrensschritt e.) bis zum Erreichen eines vorbestimmten Regenerationsgrades regeneriert. Im Anschluß daran werden die normalen Betriebsbedingungen wieder eingestellt und es erfolgt eine Rückkehr zum dem Verfahrensschritt a.).

Falls die aktuellen Ergebnisse der auch bei Durchführung der Verfahrensschritte d.) und e.) andauernden Zulässigkeitsüberprüfung des Verfahrensschrittes c.) dies erfordern, erfolgt bei erkannter Unzulässigkeit des Regenerationsvorgangs jedoch ein vorzeitiger Abbruch oder zumindest eine Unterbrechung der NOₓ-Regeneration und eine Rückkehr zum Verfahrensschritt a.) oder c.). Gegebenenfalls wird auch eine festgestellte Funktionsstörung eines der sicherheitsrelevanten Bauteile angezeigt.

Die Entscheidung über eine Rückkehr zu dem Verfahrensschritt a.) oder einer Rückkehr zu dem Verfahrensschritt c.) erfolgt vorzugsweise anhand des aktuellerweise bereits erreichten Regenerationsgrades, der mit einem vorbestimmten Regenerationsgrad verglichen wird. Bei Unterschreitung dieses Wertes, d. h. bei Überschreitung eines entsprechenden Stickoxidbeladungsgrades, wird von einer nicht ausreichenden Funktionsfähigkeit des Katalysators ausgegangen und es wird durch Rückkehr zu der Zulässigkeitsüberprüfung des Verfahrensschrittes c.) eine Fortsetzung des Regenerationsvorgangs eingeleitet. Beim Erreichen oder beim Überschreiten des vorbestimmten Regenerationsgrades hingegen ist durch Unterschreitung einer kritischen Stickoxidbeladung bereits eine ausreichend hohe katalytische Aktivität gewährleistet und es erfolgt eine Rückkehr zu dem Verfahrensschritt a.) zur Ermittlung des optimalen Zeitpunktes für die nächste NOₓ-Regeneration. Der erreichte NOₓ-Regenerationsgrad wird über den Beladungszustand des Katalysators mit Stickoxiden bestimmt.

Bei einer bevorzugten Verfahrensvariante erfolgt die Einstellung der erforderlichen Regenerationsparameter in dem Verfahrensschritt d.) erst nach Ablauf einer vorbestimmten ersten Zeitspanne und/oder nach Überschreitung zumindest eines zweiten Beladungsschwellenwertes für die Stickoxidbeladung, um möglichst wenig in das Betriebsverhalten der Brennkraftmaschine eingreifen zu müssen.

Weitere bevorzugte Verfahrensvarianten sind den zugehörigen Unteransprüchen zu entnehmen.

Die NOₓ-Einlagerung und die Speichereffektivität können durch abgastemperatursteigernde und/oder massenstromsenkende Maßnahmen verbessert werden.

Insbesondere erfolgt im Schwachlastbereich eine Teillastandrosselung über eine Drosselklappe, wobei zusätzlich eine geringe Nacheinspritzmenge zur Steigerung der Katalysatortemperatur beitragen kann. Bei höheren Lasten kann auch eine Ladedrucksenkung sowie eine Veränderung der EGR-Rate oder der Abgasrückführungsrate und/oder eine Variation des Spritzbeginns/ der Spritzdauer der Vor-, Haupt- und Nacheinspritzmenge zum Einsatz kommen. Durch Halten einer Mindesttemperatur von etwa 190-200 °C im NOₓ-Speicherkatalysator-Vorlauf werden auch die Möglichkeiten zur Durchführung einer NOₓ-Regeneration deutlich erweitert.

Um das Verfahren bei einem Common-Rail-Dieselmotor anwenden zu können, wird dieser erfindungsgemäß zusätzlich mit einer vor einem Ansaugkrümmer angeordneten Drosselklappe, einem nachgeschalteten NOₓ-Speicherkatalysator und einer Steuerungseinrichtung zur Steuerung des erfindungsgemäßen Verfahrens versehen.

Eine Abgasreinigungsvorrichtung zur Durchführung der erfindungsgemäßen Verfahren umfaßt einen NOₓ-Speicherkatalysator, dem zur Bestimmung der optimalen NOₓ-Regenerationstemperatur zumindest je ein Temperaturfühler vorgeschaltet bzw. nachgeschaltet ist, aus deren Meßwerten die eigentlich gewünschte Katalysatortemperatur bestimmt wird. Dem NOₓ-Speicherkatalysator ist zudem eine Breitbandlambdasonde zur Bestimmung des Lambda-Wertes vorgeschaltet und ein NOₓ-Sensor zur Bestimmung der NOₓ-Emission nachgeschaltet. Die Abgasreinigungsvorrichtung umfasst zudem eine Steuerungseinrichtung zur Steuerung des erfindungsgemäßen Verfahrens.

Weitere Merkmale und Vorteile ergeben sich aus der nachfolgenden Beschreibung eines bevorzugten Ausführungsbeispiels in Verbindung mit den zugehörigen Zeichnungen. In den Zeichnungen zeigen:

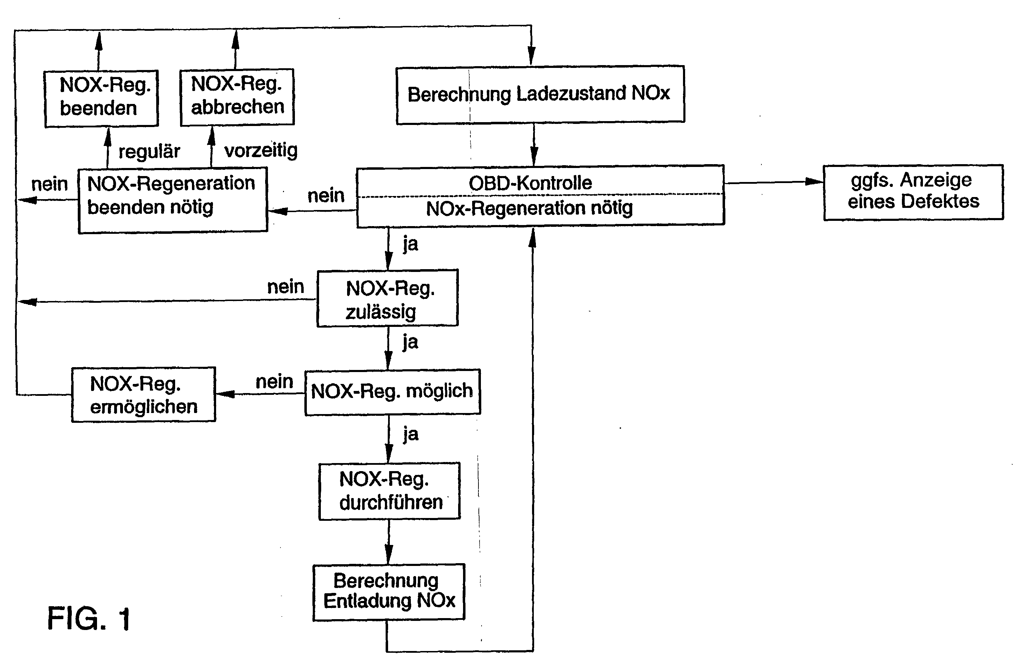

- Fig.1: ein Flußdiagramm des erfindungsgemäßen NOₓ-Regenerationsverfahrens und
- Fig. 2: eine schematische Darstellung eines Common-Rail-Dieselmotors mit einer nachgeschalteten Abgasreinigungsvorrichtung zur Durchführung des Verfahrens gemäß Fig. 1.

Ausgangspunkt für das erfindungsgemäße Verfahren ist die kontinuierliche Bestimmung der NOₓ-Speicheraktivität oder des NOₓ-Emissionsschlupfs, der bei magerer Betriebsweise anhand des aktuellen Beladungszustandes des NOₓ-Speicherkatalysators, der anströmenden NOₓ-Rohemission, der Abgas- oder Katalysatortemperatur und des Abgasmassenstroms bestimmt wird Die NOₓ-Rohemission wird hierbei anhand eines Kennfeldes aus dem Verbrauch oder aus den gefahrenen Motorbetriebspunkteri (Drehzahl n, aktuelle Einspritzmenge M_E) bestimmt. Sie kann über Korrekturfelder für den Ladedruck, die EGR-Rate, die Drosselklappenstellung sowie den Beginn der Vor- und Haupteinspritzung und die Dauer der Voreinspritzung korrigiert werden.

Da die katalytische Aktivität und damit die Funktionstüchtigkeit des Katalysators, wie bereits erwähnt wurde, mit steigender Stickoxidbeladung allmählich absinkt, wird zur Gewährleistung einer ordnungsgemäßen Funktionsweise des Katalysators bei Überschreitung eines einer maximal zulässigen Stickoxidbeladung bzw. bei Unterschreitung eines einer minimal zulässigen Katalysatoraktivität entsprechenden vorbestimmten Beladungs- bzw. Aktivitätsschwellenwertes eine NOₓ-Regeneration als erforderlich erachtet und es werden die hierfür erforderlichen Maßnahmen in Form der nachfolgend beschriebenen Verfahrensschritte ergriffen.

Zur Gewährleistung einer ordnungsgemäßen Betriebsweise des NOₓ-Speicherkatalysators findet zudem ergänzend zu der Bestimmung des Beladungszustandes eine OBD-Kontrolle (OBD = On-Board-Diagnose) des Katalysators statt, die im wesentlichen aus einer Überwachung der NOₓ-Speicheraktivität zur Feststellung eventuell auftretender Unregelmäßigkeiten besteht. Die Soll-Werte der NOₓ-Speichereffizienz dienen daher als Eingangssignal für die OBD-Kontrolle.

Unregelmäßigkeiten der Katalysatoraktivität machen sich im wesentlichen durch zwei Schädigungsbilder bemerkbar, die auch gemeinsam auftreten können:
■ Nach einer NOₓ-Regeneration wird zunächst eine gute NOₓ-Einlagerung gemessen, die Sättigung setzt jedoch schneller und stärker als berechnet ein.
■ Nach einer NOx-Regeneration wird ein stärkerer NOₓ-Durchbruch gemessen als nach den Berechnungen zu erwarten ist.

Bei Belegung oder Zerstörung der Edelmetallkomponenten des Katalysators ist neben der abnehmenden NOₓ-Aktivität auch mit einer Minderung der HC⁻, CO⁻ und Partikelkonvertierung zu rechnen, so daß ein Abgleich der berechneten mit der gemessenen NOₓ-Speichereffizienz zur Katalysatordiagnose ausreicht. Unregelmäßigkeiten der Katalysatoraktivität werden daher durch Bestimmung von NOₓ-Durchbrüchen ermittelt, die in einem vorbestimmten Zeitfenster von etwa 30 s einen vorbestimmten Durchbruchsschwellenwert überschreiten müssen, der bis zu einer NOₓ-Rohemission von etwa 10 g/h einer Abweichung von etwa 2 g/h zwischen Istwert und Sollwert entspricht, während er bei höheren NOₓ-Rohemissionen einer Abweichung von 20 % entspricht.

Nach Feststellung einer solchen Unregelmäßigkeit der Katalysatoraktivität wird unter Durchführung der nachfolgenden beschriebenen Verfahrensschritte zunächst zumindest eine vorgezogene NOₓ-Regeneration durchgeführt. Bei Fortbestehen der Unregelmäßigkeiten wird zudem , wie bei einer zu hohen Schwefelbeladung auch, zusätzlich zumindest noch eine De-Sulfatierung eingeleitet.

Zur Durchführung einer vorgezogenen oder regulären NOₓ-Regeneration wird zunächst die aktuelle Fahrsituation auf Einhaltung vorbestimmter Fahrparameter überprüft, da eine solche Maßnahme nicht bei allen Fahr- oder Betriebssituationen zulässig ist. Insbesondere die Drehzahl, die Last, die Laständerung und die Fahrgeschwindigkeit müssen hierbei innerhalb vorgegebener Zulässigkeitsgrenzen liegen, die eingehalten werden müssen, damit eine NOₓ-Regeneration erfolgen kann oder ein bereits begonnener Regenerationsvorgang nicht unterbrochen oder abgebrochen wird.

Bei sehr hohen Drehzahlen oder Lasten ist eine Anfettung des insbesondere bei Turbomotoren sehr hohen Abgasmassenstroms auf einen Lambda-Wert von weniger als 1, wie er zur Durchführung einer NOₓ-Regeneration erforderlich ist, nur in Verbindung mit hoher Exothermie im Abgas möglich, so daß bei Drehzahlen von mehr als etwa 3600 min⁻¹ keine Regeneration erfolgt. Auch bei Drehzahlen von weniger als etwa 1200 min⁻¹ wird eine NOₓ-Regeneration unterdrückt, da diese nur während des Fahrbetriebs mit entsprechend hohen Drehzahlen erfolgen soll, um akustische Einflüsse durch die erforderliche Teilandrosselung in Fahrphasen mit höheren Abroll- und Windgeräuschen, d. h. höhere Geschwindigkeiten, zu verlagern und um eventuell auftretende, unerwünschte geruchsintensive Reaktionsprodukte nicht im Stillstand oder bei zu geringer Fahrgeschwindigkeit zu emittieren. Aus diesem Grund wird auch die zulässige Mindestfahrgeschwindigkeit zur Durchführung einer NOₓ-Regeneration auf etwa 20 km/h begrenzt.

Zur Vermeidung gefährlicher Fahrsituationen wird auch bei abrupten Laständerungswünschen keine NOₓ-Regeneration zugelassen. Als Maß für die Laständerungswünsche dient hierbei eine zeitliche Veränderung des Pedalwertgebers PWG oder die PWG-Geschwindigkeit, die beispielsweise einen Wert von etwa 100 %Is nicht überschreiten darf.

Die Zulässigkeit einer NOₓ-Regeneration bei einer vorgegebenen Fahrsituation kann auch aus Schwellenwerten für die Einspritzmenge, den Drehzahlgradienten oder für ein Schuberkennungs- oder Bremssignal abgeleitet werden, wobei beispielsweise die Einspritzmenge in Abhängigkeit vom verwendeten Motortyp 10 - 90 % des Maximalwertes betragen sollte. Falls eine oder mehrere dieser Möglichkeiten nicht benötigt werden, so können diese durch entsprechende Wahl der Schwellenwerte oder Zulässigkeitsgrenzen oder durch soft- oder hardwaremäßige Schalter außer Betrieb genommen werden.

Der NOₓ-Speicherkatalysator benötigt nach einer De-Sulfatierung oder einer vollständig verlaufenen oder aus den nachstehend noch dargelegten Gründen unterbrochenen oder vorzeitig abgebrochenen NOₓ-Regeneration stets eine Abkühl- oder Erholungspause bis zur Durchführung einer erneuten Regeneration, deren Dauer abhängig ist von der zum Erreichen des Regenerationszustandes bzw. zum Einleiten der NOₓ-Regeneration erforderlichen Vorbereitungszeit und der eigentlichen Regenerationsdauer. Typische Zeiten liegen zwischen 30 und 300 s, insbesondere jedoch zwischen 40 und 60 s. Nach Beendigung einer NOₓ-Regeneration wird daher durch ein entsprechendes Abbruch- oder Endsignal eine Zeitfunktion gestartet, die in Abhängigkeit von der Vorbereitungs- und Regenerationszeit eine variable Erholungszeit errechnet, in der keine NOₓ-Regeneration zugelassen wird. Vor dem Einleiten einer Regeneration wird daher als weitere Zulässigkeitsvoraussetzung auch die Einhaltung der erforderlichen Erholungsdauer überprüft.

Die erforderliche Anfettung des Abgasstroms auf λ ≤ 1 kann zu einer Anhebung der gesamten eingespritzten Kraftstoffmenge und damit zu einer Leistungszunahme führen.

Eine zusätzliche Kontrolle erfolgt über ein Lambdasignal, das zur Gewährleistung einer hinreichend schnellen Oxidationsreaktion auf dem Vorkatalysator und dem NOₓ-Speicherkatalysator einen vorbestimmten unteren Schwellenwert nicht unterschreiten darf, der dem durch motorische Maßnahmen einzustellenden Lambda-Wert bei der NOₓ-Regeneration entspricht.

In Abhängigkeit von dem vor Einleitung der motorischen Maßnahmen vorliegenden Lambda-Wert kann die Vorbereitung der NOₓ-Regeneration zunächst durch motorische Maßnahmen, wie z. B. eine Teilandrosselung der Brennkraftmaschine undloder eine Erhöhung der EGR-Rate und/oder eine Senkung des Ladedrucks (unter Beachtung der Partikelemission und Korrektur der Haupteinspritzmenge zur Kompensation eventueller Leistungseinbrüche als Folge der Drosselung), schnell eingeleitet werden. Mit Annäherung an einen vorbestimmten Lambda-Schwellenwert von etwa 1,1-1,6, insbesondere jedoch etwa 1,3-1,5, wird dann die Verstellgeschwindigkeit der Aktuatoren zunehmend verlangsamt, um eine annähernd drehmomentneutrale Anpassung der Haupteinspritzung zu ermöglichen. Dieser Lambda-Wert richtet sich nach dem Betriebspunkt des Motors und kann über die PWG-Geschwindigkeit dynamikkorrigiert werden.

Nach Abschluß dieser ersten Stufe wird die Nacheinspritzmenge in einer zweiten Stufe rampenförmig angehoben und ihr Maximalwert so geregelt, daß der Lambda-Wert nach dem Motor den Wert des Regenerations-Lambda-Wertes von etwa 0,75 - 0,99, insbesondere jedoch etwa 0,92 - 0,99, annimmt. Der Einspritzpunkt wird dabei so eingestellt, daß die Nacheinspritzung im Expansionstakt nach Brennende oder im Ausschubtakt erfolgt. Erfolgt die Nacheinspritzung während des Brennendes, so ist diese Energieabgabe durch Korrektur der Haupteinspritzmenge zu kompensieren. Der Wert des Regenerations-Lambda-Wertes kann dabei über die Regenerationszeit in Abhängigkeit vom Beladungszustand des Katalysators mit Stickoxiden und Schwefel, der Abgasdurchströmung und der Abgastemperatur vor und nach dem NOₓ-Speicherkatalysator variieren.

Da die NOₓ-Regeneration überwiegend mit CO als Regenerationsmittel abläuft, wird in einer dritten Stufe die Voreinspritzmenge betriebspunktabhängig und gedämpft auf einen Wert von etwa 1-50 %, insbesondere jedoch 5-20 %, der Haupteinspritzmenge angehoben und gleichzeitig die Haupteinspritzmenge betriebspunktabhängig und gedämpft zurückgenommen Der Voreinspritzzeitpunkt liegt hierbei vor Zündbeginn im Ansaugtakt oder in der ersten Phase des Verdichtungstaktes.

Um das Fahrverhalten möglichst wenig zu beeinflussen, kann die Einstellung der erforderlichen Regenerationsparameter auch erst nach Ablauf einer vorbestimmten Zeitspanne oder nach Überschreitung eines zweiten Beladungsschwellenwertes für die Stickoxidbeladung erfolgen, der beispielsweise einer Beladung entspricht, bei der eine Regeneration dringend erforderlich ist. In diesem Fall wird der Beladungszustand des NOₓ-Speicherkatalysators durch die Beladungsschwellenwerte in drei charakteristische Bereiche unterteilt, in denen eine "Regeneration nicht nötig", eine "Regeneration nötig" oder eine "Regeneration dringend nötig" ist. Es ist auch eine Kombination beider Verfahren oder auch eine feinere Unterteilung des Beladungszustandes durch Verwendung weiterer Beladungsschwellenwerte denkbar.

Im Zustand "Regeneration nötig" findet dann eine NOₓ-Regeneration des NOₓ-Speicherkatalysators nur statt, wenn sowohl die Betriebssituation eine Regeneration erlaubt, d. h., wenn die angegebenen Zulässigkeitsvoraussetzungen erfüllt sind, als auch die erforderlichen Betriebsparameter eingestellt sind und eine Regeneration ermöglichen. Andernfalls wird mit einer Regeneration so lange gewartet, bis der Zustand "Regeneration dringend nötig" erreicht ist. Dann wird jedoch beim Vorliegen der Zulässigkeitsvoraussetzungen durch verschiedene motorische Maßnahmen der genannten Art, die einzeln oder in Kombination erfolgen, auf die Betriebsparameter derart Einfluß genommen, daß eine Regeneration erfolgen kann. Durch diese aus der bereits genannten DE 197 16 275 C1 bekannte zweistufige Vorgehensweise wird das Betriebsverhalten der Brennkraftmaschine möglichst wenig beeinflußt.

Vor Einsetzen der NOₓ-Regeneration muß zunächst der im NOₓ-Speicherkatalysator lagernde Restsauerstoff verbraucht werden. Der bei fettem Abgas hierfür nutzbare Reduktionsmittelüberschuß läßt sich aus dem HC- und CO-Massenstrom errechnen. Anschließend werden die gespeicherten Stickoxide mit dem Reduktionsmittelüberschuß umgesetzt. Die Reaktion läuft nicht vollkommen stöchiometrisch ab, sondern wird über den Lambda-Wert, den Abgasmassenstrom und die Abgastemperatur vor und nach dem NOₓ-Speicherkatalysator korrigiert.

Die eigentliche NOₓ-Regeneration wird durch eine Teilandrosselung des Motors und/oder eine Erhöhung der EGR-Rate und/oder eine Senkung des Ladedrucks (unter Beachtung der Partikelemission) und/oder eine Anhebung der Vor- und Nacheinspritzmenge und/oder eine Senkung der Haupteinspritzmenge gesteuert.

Insbesondere durch die Teilandrosselung ist mit einer Momentenänderung zu rechnen, die durch Anpassung der Haupteinspritzmenge korrigiert werden muß, ohne daß der Fahrer eine Änderung des Fahrverhaltens bemerkt. Die Korrektur der Momentenänderung kann hierbei auch erst nach Überschreiten eines bestimmten Schwellenwertes erfolgen.

Zur Korrektur wird zunächst per Kennfeld ein Sollmoment abgerufen. Momentenänderungen als Folge eines Motoreingriffs ergeben sich durch Abweichungen bei der Ladungswechselarbeit und durch eine Verbrennungsverschleppung infolge anderer Drosselklappen- und EGR- und Ladedruckeinstellungen. Daneben führt eine unvollständige Verbrennung bei sehr niedrigen Lambda-Werten als Folge von Androsselung/Ladedrucksenkung/Anhebung der EGR-Rate zu einer Korrektur des Sollmomentes. Bei sehr hohen Nacheinspritzmengen verbleiben Kraftstoffreste im Zylinder, die erst im nächsten Takt mit verbrennen und somit ebenfalls momentenbeeinflussend sind. Nur zur Applikationserleichterung wird abschließend bei der Ermittlung des tatsächlichen Momentes ein weiteres Korrekturfeld additiv eingeschleift.

Eine Änderung der Haupteinspritzmenge wird erst freigegeben, wenn ein vorbestimmter Schwellenwert der Momentenabweichung überschritten wird.

Die pro Zeiteinheit im fetten Abgas mögliche absolute Entladung des NOₓ-Speicherkatalysators richtet sich nach dem verfügbaren Reduktionsmittelangebot, d. h. nach der verfügbaren Reduktionsmittelmenge und der Reduktionsmittelzusammensetzung im Fetten. Der Regenerationsablauf wird zudem durch den Beladungszustand des Katalysators, den NOₓ- und Restsauerstoffgehalt des anströmenden Abgases, der Temperatur des Speicherkatalysators, den Abgasmassenstrom sowie die O₂-Speicherfähigkeit des Washcoats beeinflußt und kann modellmäßig erfaßt werden. Die CO- und HC-Massenströme im Abgas lassen sich aus dem Spritzbeginn und der Spritzdauer der Vor-, Haupt- und Nacheinspritzung sowie aus der Drehzahl und dem Luftmassenstrom errechnen.

Die NOₓ-Regeneration wird üblicherweise bis zum Erreichen eines vorbestimmten Regenerationsgrades durchgeführt. Anschließend werden wieder normale Betriebsbedingungen eingestellt und es wird erneut mit der eingangs beschriebenen Bestimmung des Beladungszustandes begonnen, um den Zeitpunkt für die nächste NOₓ-Regeneration zu ermitteln.

Bei dieser regulären Beendigung der NOₓ-Regeneration wird in umgekehrter Reihenfolge wie bei der Durchführung der NOₓ-Regeneration verfahren. Zunächst wird die Voreinspritzmenge zeitgesteuert rampenförmig auf den Normalwert zurückgeführt, wobei jedoch die Änderungsgeschwindigkeit größer ist als bei der Durchführung der Regeneration. Die Nacheinspritzung kann gleichzeitig ohne Verzögerung gestoppt werden, da sie keinen oder allenfalls einen geringen Einfluß auf den Brennverlauf besitzt Zudem werden die Drosselklappe, der EGR-Steller und der Ladedruckregler mit einer vom Lambda-Wert und vom Betriebspunkt (Drehzahl n, aktuelle Einspritzmenge M_E) abhängigen Verstellgeschwindigkeit auf die Normalwerte zurückgeführt.

In manchen Fällen kann es jedoch auch zu einem vorzeitigen Abbruch oder zumindest zu einer Unterbrechung eines bereits begonnenen Regenerationsvorgangs kommen, falls dieser aufgrund der aktuellen Ergebnisse der bereits beschriebenen Zulässigkeitsüberprüfung unzulässig sein sollte.

Beim vorzeitigen Abbruch einer NOₓ-Regeneration werden Haupt- und Voreinspritzmenge sofort auf den Normalwert gesetzt und gleichzeitig die Nacheinspritzung abgeschaltet. Wenn der Abbruch des Regenerationsvorgangs jedoch aus einer zu geringen Fahrgeschwindigkeit, d. h. einer Geschwindigkeit von weniger als etwa 20 km/h resultiert, wird die Nacheinspritzung für eine bestimmte Taktzeit nur reduziert. Die Nacheinspritzung wird nicht abgeschaltet, wenn der Abbruch der NOₓ-Regeneration auf eine zu große Laständerung zurückzuführen ist, d. h. wenn die zeitliche Änderung des Pedalwertgebers PWG einen vorbestimmten Schwellenwert überschreitet. Die Drosselklappe, der EGR-Steller und der Ladedruckregler werden in Abhängigkeit vom errechneten oder gemessenen Lambda-Wert mit hoher Geschwindigkeit wieder auf den Normalwert zurückgeführt.

Eine andere Möglichkeit für eine plötzliche Unzulässigkeit des NOₓ-Regenerationsvorgangs besteht in einer zu hohen thermischen Belastung des NOₓ-Speicherkatalysators durch Überschreitung eines Schwellenwertes für die Regenerations-Gesamtzeit, die sich aus der zum Umschalten vom normalen Betriebszustand in den Regenerationszustand bzw. der zum Einleiten einer NOₓ-Regeneration erforderlichen Vorbereitungs- oder Aufheizzeit und aus der zur Durchführung einer Regeneration erforderlichen eigentlichen Regenerationszeit zusammensetzt. Alternativ hierzu können auch Schwellenwerte für die Einzelzeiten verwendet werden. Die zulässige Regenerationsdauer beträgt hierbei etwa maximal 5 - 30 s, insbesondere jedoch etwa 15 s.

Nach dem vorzeitigen Abbruch oder einer Unterbrechung des Regenerationsvorgangs wird kontinuierlich die Zulässigkeit einer Regeneration sowie die Möglichkeit zu deren Durchführung weiter überprüft, um, falls erforderlich, den abgebrochenen Regenerationsvorgang durch Weiterführung so bald wie möglich zu beenden, und damit die volle Funktionsfähigkeit des NOₓ-Speicherkatalysators wieder herstellen zu können.

Zudem wird die Stickoxidbeladung des NOₓ-Speicherkatalysators und damit dessen Regenerationsgrad bestimmt und mit einer maximal zulässigen Restbeladung von etwa 5 - 15 % bezogen auf den Beladungszustand bei Einleitung der NOₓ-Regeneration bestimmt. Bei Unterschreitung dieses Wertes ist der NOₓ-Speicherkatalysator durch den vorangegangenen Regenerationsvorgang bereits ausreichend gut regeneriert, um eine ordnungsgemäße Funktionsweise gewährleisten zu können. In diesem Fall wird der Regenerationsvorgang endgültig abgebrochen und es wird durch Rückkehr zu der anfangs beschriebenen kontinuierlichen Bestimmung des Beladungszustandes der Zeitpunkt für die nächste reguläre NOₓ-Regeneration bestimmt.

Beim Erreichen oder Überschreiten der angegebenen Restbeladung erfolgt hingegen nach erneutem Vorliegen der Zulässigkeitsvoraussetzungen eine Fortführung des unterbrochenen Regenerationsvorgangs bis zum Erreichen des vorbestimmten Regenerationsgrades. Um die zum Erwärmen des Speicherkatalysators eingesetzte Energie möglichst optimal nutzen zu können, wird die Katalysatortemperatur hierbei durch abgeschwächte temperaturerhaltende Maßnahmen beibehalten und erst nach Ablauf einer vorbestimmten Zeitspanne von etwa 10- 300 s, insbesondere jedoch 30 - 50 s, ohne Erfüllung der Zulässigkeitsvoraussetzungen auf normale Betriebswerte abgesenkt.

Die NOₓ-Regeneration gilt als beendet, wenn die Abweichung des Ist-Lambda-Wertes vom Normal-Lambda-Wert unterhalb eines bestimmten Schwellenwertes liegt, wobei der Lambda-Wert sowohl durch eine Messung mittels eines Lambda-Sensors als auch über eine Berechnung bestimmt werden kann.

Zur Gewährleistung einer ordnungsgemäßen Funktionsweise des NOₓ-Speicherkatalysators wird nach einer vorgezogenen NOₓ-Regeneration und/oder De-Sulfatierung auf Grund einer durch die OBD-Kontrolle ermittelten Unregelmäßigkeit der Katalysatoraktivität die Anzahl der nachfolgend durchgeführten erfindungsgemäßen NOₓ-Regenerationen bestimmt und mit. einer vorbestimmten Mindestanzahl aufeinanderfolgender NOₓ-Regenerationen verglichen, die 10-100, vorzugsweise jedoch etwa 20 beträgt. Beim Auftreten einer erneuten Unregelmäßigkeit der Katalysatoraktivität vor Erreichung dieser Mindestanzahl wird von einem Katalysatordefekt ausgegangen, der durch eine ansprechende Anzeigeeinrichtung angezeigt wird.

Zwischen den einzelnen Regenerationsvorgängen wird die NOₓ-Einlagerung in den Speicherkatalysator durch abgastemperatursteigende und abgasmassenstromsenkende Maßnahmen begünstigt, was im Vergleich zu herkömmlichen Abgasreinigungsverfahren zu einer merklichen Verminderung des Stickoxidausstoßes führt. Die Verbesserung der NOₓ-Einlagerung erfolgt hierbei insbesondere durch eine Steigerung der Abgastemperatur vor dem NOₓ-Speicherkatalysator auf einen Wert von mehr als etwa 190 °C mittels einer EGR-Änderung, einer Drosselung der Frischluftmenge um bis zu 70 % und eine Ladedrucksenkung bis hin zum reinen Saugbetrieb. Diese Werte werden über die Abgastemperatur und die PWG-Dynamik korrigiert. Es erfolgt ein gedämpftes Einsetzen und Ausschleifen der Maßnahmen. Da die Katalysatoren bei diesen Temperaturen noch zu kalt zur Schadstoffumsetzung sind, macht eine Nacheinspritzung keinen Sinn. Es dürfen nur thermische Maßnahmen ergriffen werden.

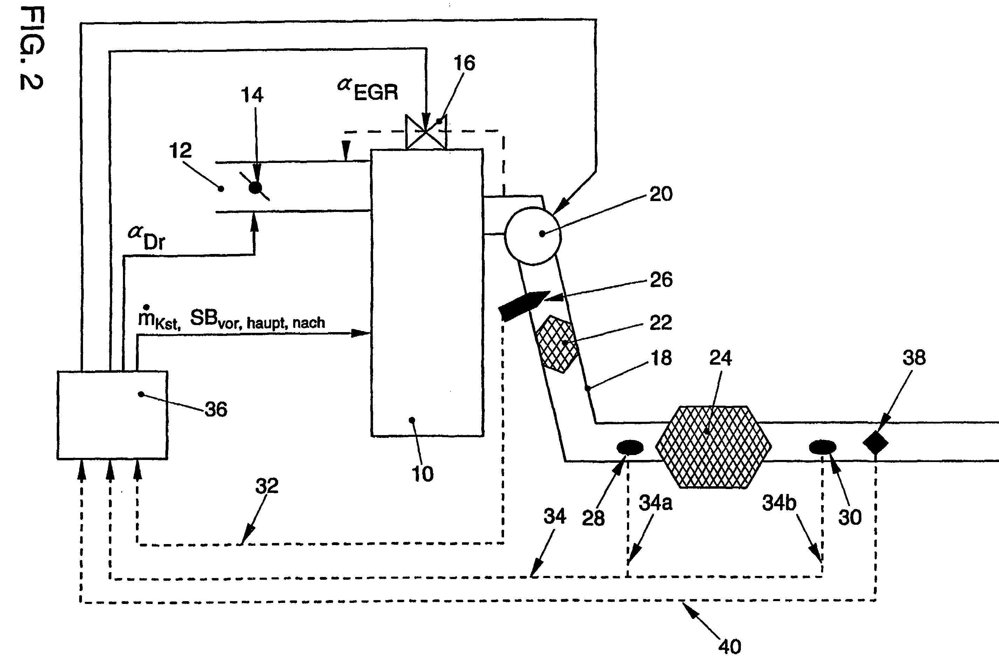

Fig. 2 zeigt in schematischer Darstellung einen zur Durchführung des erfindungsgemäßen Regenerationsverfahrens und zur Verbesserung der NOₓ-Einlagerung, d. h. zur wirkungsvollen Verringerung der Stickoxidemission geeigneten Common-Rail-Dieselmotor 10 mit einem vorgeschalteten Saugrohr 12 und einer darin eingebauten Drosselklappe 14, die hinter nicht dargestellten Ladedruck- und Temperatursensoren aber vor einer EGR-Einleitung 16 angeordnet ist und zur Reduzierung des Luft-Kraftstoffverhältnisses Lambda ohne Drehmomenteneinbrüche dient. Die Ansteuerung der Drosselklappe 14 erfolgt entweder durch ein pulsweitenmoduliertes Signal mit fester Frequenz, welches sich aus dem Tastverhältnis der Ansteuerung ergibt, oder durch eine CAN-Botschaft, die prozentual die Stellung der Drosselklappe 14 beschreibt. Die Ruhestellung der Drosselklappe 14 ist grundsätzlich in Stellung "offen". Die Definition, welcher Wert des Ansteuersignals welcher Drosselklappenstellung entspricht, ist per Software einstellbar.

Das Abgas des Dieselmotors 10 gelangt über eine Abgasleitung 18 mit einem Abgasturbolader 20 in eine Abgasreinigungsvorrichtung mit einem Vorkatalysator 22 und einem NOₓ-Speicherkatalysator 24. Dem Vorkatalysator 22 ist eine Breitbandlambdasonde 26 zur Messung des Lambda-Wertes vorgeschaltet, die zusätzlich oder alternativ zu einer Berechnung des Lambda-Wertes erfolgt.

Vor dem NOₓ-Speicherkatalysator 24 und nach dem NOₓ-Speicherkatalysator 24 ist jeweils ein Temperaturfühler 28 bzw. 30 zur Überwachung der minimal bzw. maximal zulässigen Regenerationstemperatur angeordnet. Die Temperaturfühler 28, 30 dienen zudem zur- Überwachung des für eine De-Sulfatierung erforderlichen Temperaturbereichs sowie zur Steuerung der optimalen NOₓ-Einlagerung durch temperatursteigernde Maßnahmen. Durch Vergleich der Ausgangstemperatur des aus dem NOₓ-Speicherkatalysator 24 ausströmende Abgases mit der Eingangstemperatur des in den Katalysator 24 einströmenden Abgases kann die katalytische Aktivität des NOₓ-Speicherkatalysators 24 überwacht werden.

Dem NOx-Speicherkatalysator 24 ist ein NOₓ-Sensor 38 zur Messung der Stickoxidemission nachgeschaltet, der zur Bestimmung von Unregelmäßigkeiten der Katalysatoraktivität dient.

Die Meßsignale der Breitbandlambdasonde 26, der Temperaturfühler 28, 30 und des NOₓ-Sensors 38 liegen über Leitungen 32, 34, 40 an einer zugehörigen Steuereinrichtung 36 zur Steuerung des Motors 10 an.

## Patentansprüche

1. Verfahren zur NOₓ-Regeneration eines einer mager betriebenen Brennkraftmaschine (10) nachgeschalteten NOₓ-Speicherkatalysators (24) mit folgenden Verfahrensschritten:
a) Bestimmung des Beladungszustandes des NOₓ-Speicherkatalysators (24) mit Stickoxiden und Vergleich der ermittelten Beladungswerte mit einem vorbestimmten ersten Beladungsschwellenwert für eine maximal zulässige Stickoxidbeladung;
b.) OBD-Kontrolle des NOₓ-Speicherkatalysators (24) zur Feststellung eventuell auftretender Unregelmäßigkeiten der Katalysatoraktivität durch Bestimmung von NOₓ-Durchbrüchen, die in einem bestimmten Zeitfenster einen bestimmten Durchbruchsschwellenwert überschreiten müssen;
c.) bei Überschreitung des ersten Beladungsschwellenwertes oder bei Feststellung einer Unregelmäßigkeit der Katalysatoraktivität: Überprüfung der Zulässigkeit einer NOₓ-Regeneration durch Überprüfung der aktuellen Fahrsituation auf Einhaltung vorbestimmter Fahrparameter und durch Überprüfung der ordnungsgemäßen Funktionsweise sicherheitsrelevanter Bauteile, wobei die sicherheitsrelevanten Bauteile ein Einspritzsystem und/oder eine Drosselklappe (14) und/oder einen EGR-/Ladedrucksteller umfassen;
d.)Überprüfung, ob durch Einhaltung vorbestimmter NOₓ-Regenerationsparameter die Möglichkeit zur Durchführung einer NOₓ-Regeneration gegeben ist, gegebenenfalls Einstellung der erforderlichen NOₓ-Regenerationsparameter und Einleitung der NOₓ-Regeneration bei Zulässigkeit einer solchen Maßnahme; ansonsten Wiederholung des Verfahrensschrittes c.) und gegebenenfalls Signalisierung einer festgestellten Funktionsstörung eines der sicherheitsrelevanten Bauteile; und
e.) Durchführung der NOₓ-Regeneration bis zum Erreichen eines vorbestimmten NOₓ-Regenerationsgrades, Einstellung normaler Betriebsbedingungen und Rückkehr zu dem Verfahrensschritt a.); oder falls die aktuellen Ergebnisse der Zulässigkeitsüberprüfung des Verfahrensschrittes c.) dies erfordern: vorzeitiger Abbruch oder Unterbrechung der NOₓ-Regeneration, Rückkehr zu dem Verfahrensschritt a.) oder c.), und gegebenenfalls Signalisierung einer festgestellten Funktionsstörung eines der sicherheitsrelevanten Bauteile.

2. Verfahren nach Anspruch 1, **dadurch gekennzeichnet, dass** die Einstellung der erforderlichen Regenerationsparameter bei dem Verfahrensschritt d.) erst nach Ablauf einer vorbestimmten ersten Zeitspanne und/oder nach Überschreitung zumindest eines zweiten Beladungsschwellenwertes für die Stickoxidbeladung erfolgt.

3. Verfahren nach Anspruch 1 oder 2, **dadurch gekennzeichnet, dass** nach einem vorzeitigen Abbruch oder einer Unterbrechung der NOₓ-Regeneration der Beladungszustand der NOₓ-Speicherkatalysators (24) mit Stickoxiden bestimmt und bei Unterschreitung eines vorbestimmten Regenerationsgrades, d. h. bei Überschreitung einer vorbestimmten Stickoxidbeladung, durch Rückkehr zu dem Verfahrensschritt c.) eine erneute NOₓ-Regeneration eingeleitet wird, während beim Erreichen oder bei einer Überschreitung des vorbestimmten Regenerationsgrades eine Rückkehr zu dem Verfahrensschritt a.) erfolgt.

4. Verfahren nach Anspruch 3, **dadurch gekennzeichnet, dass** der vorbestimmte Regenerationsgrad weniger als 5 - 15 % Restbeladung bezogen auf den Beladungszustand bei Einleitung der NOₓ-Regeneration beträgt.

5. Verfahren nach einem der vorhergehenden Ansprüche, **dadurch gekennzeichnet, dass** der NOₓ-Speicherkatalysator (24) einem Common-Rail-Dieselmotor nachgeschaltet wird.

6. Verfahren nach einem der vorhergehenden Ansprüche, **dadurch gekennzeichnet, dass** die Fahrsituation aus einem Schwellenwert für den Pedalwertgeber PWG und/oder der Einspritzmenge und/oder der Drehzahl und/oder einem Schuberkennungssignal und/oder einem Bremssignal. und/oder einem Drehzahlgradienten abgeleitet wird.

7. Verfahren nach einem der vorhergehenden Ansprüche, **dadurch gekennzeichnet, dass** eine NOₓ-Regeneration nur bei Überschreitung einer bestimmten Mindestfahrgeschwindigkeit durchgeführt wird.

8. Verfahren nach Anspruch 7, **dadurch gekennzeichnet, dass** die Mindestfahrgeschwindigkeit 20 km/h beträgt.

9. Verfahren nach einem der vorhergehenden Ansprüche, **dadurch gekennzeichnet, dass** nur in einem bestimmten Drehzahl- oder Lastbereich und in einem bestimmten Bereich von Lastanderungswünschen oder in einem bestimmten Bereich der zeitlichen Veränderung eines Pedalwertgebers (PWG-Geschwindigkeit) eine NOₓ-Regeneration durchgeführt wird.

10. Verfahren nach Anspruch 9, **dadurch gekennzeichnet, dass** der Drehzahlbereich 1200 - 3600 min⁻¹ beträgt, während die maximale zeitliche Veränderung des Pedalwertgebers (PWG-Geschwindigkeit) < 100 %/s ist.

11. Verfahren nach einem der vorhergehenden Ansprüche, **dadurch gekennzeichnet, dass** eine NOₓ-Regeneration nur durchgeführt wird, wenn die Haupteinspritzmenge 10 - 90 % des Maximalwertes beträgt.

12. Verfahren nach einem der vorhergehenden Ansprüche, **dadurch gekennzeichnet, dass** die Einhaltung der erforderlichen Regenerationstemperatur durch Bestimmung der Abgastemperatur vor und/oder hinter dem NOₓ-Speicherkatalysator (24) überwacht wird.

13. Verfahren nach einem der vorhergehenden Ansprüche, **dadurch gekennzeichnet, dass** zur Durchführung einer NOₓ-Regeneration eine Abgastemperatur von 220 - 500 °C eingestellt wird.

14. Verfahren nach einem der vorhergehenden Ansprüche, **dadurch gekennzeichnet, dass** die Abgas- oder Katalysatortemperatur durch Einstellung der EGR-Rate und/oder einer Drosselklappe und/oder des Ladedruckstellers und/oder der Nacheinspritzmenge und/oder des Zeitpunktes der Nacheinspritzung und/oder des Spritzbeginns der Haupteinspritzung gesteuert wird.

15. Verfahren nach einem der vorhergehenden Ansprüche, **dadurch gekennzeichnet, dass** die zur Einleitung einer NOₓ-Regeneration erforderliche Vorbereitungszeit und die zur Durchführung der NOₓ-Regeneration erforderliche eigentliche Regenerationsdauer bestimmt werden und dass eine NOₓ-Regeneration auch bei Überschreitung einer vorbestimmten maximal zulässigen Vorbereitungszeit und/oder einer maximal zulässigen Regenerationsdauer als für unzulässig erachtet wird.

16. Verfahren nach Anspruch 15, **dadurch gekennzeichnet, dass** die maximal zulässige Regenerationsdauer 5 - 30 s beträgt.

17. Verfahren nach Anspruch 16, **dadurch gekennzeichnet, dass** die maximal zulässige Regenerationsdauer 15 s beträgt.

18. Verfahren nach einem der vorhergehenden Ansprüche, **dadurch gekennzeichnet, dass** innerhalb einer vorbestimmten minimalen Erholungszeit nach einer ordnungsgemäßen Beendigung oder einem vorzeitigen Abbruch bzw. einer Unterbrechung einer erfindungsgemäßen NOₓ-Regeneration keine De-Sulfatierung oder erneute erfindungsgemäße NOₓ-Regeneration durchgeführt wird.

19. Verfahren nach Anspruch 18, **dadurch gekennzeichnet, dass** die minimale Erholungszeit in Abhängigkeit von der zur Einleitung der NOₓ-Regeneration erforderlichen Vorbereitungszeit und der zur Durchführung der NOₓ-Regeneration erforderlichen eigentlichen Regenerationsdauer variabel gewählt wird.

20. Verfahren nach Anspruch 18 oder 19, **dadurch gekennzeichnet, dass** die minimale Erholungszeit 30 - 300 s beträgt.

21. Verfahren nach Anspruch 20, **dadurch gekennzeichnet, dass** die minimale Erholungszeit 40 - 60 s beträgt.

22. Verfahren nach einem der vorhergehenden Ansprüche, **dadurch gekennzeichnet, dass** die Katalysatortemperatur nach einer Unterbrechung oder einem vorzeitigen Abbruch der NOₓ-Regeneration durch abgeschwächte temperaturerhaltende Maßnahmen beibehalten und erst nach Ablauf einer vorbestimmten zweiten Zeitspanne auf normale Betriebswerte abgesenkt wird.

23. Verfahren nach Anspruch 22, **dadurch gekennzeichnet, dass** die vorbestimmte zweite Zeitspanne 10 - 300 s beträgt.

24. Verfahren nach Anspruch 23, **dadurch gekennzeichnet, dass** die vorbestimmte zweite Zeitspanne 30 - 50 s beträgt.

25. Verfahren nach einem der vorhergehenden Ansprüche, **dadurch gekennzeichnet, dass** die NOₓ-Speicheraktivität oder der NOₓ-Emissionsschlupf bei magerer Betriebsweise anhand des aktuellen Beladungszustandes des Nox-Speicherkatalysators (24), der ausströmenden NOₓ-Rohemission, der Abgas- oder Katalysatortemperatur und des Abgasmassenstroms bestimmt wird.

26. Verfahren nach Anspruch 25, **dadurch gekennzeichnet, dass** die NOₓ-Rohemission anhand eines Kennfeldes aus dem Verbrauch oder den gefahrenen Motorbetriebspunkten (Drehzahl n, aktuelle Einspritzmenge M_E) bestimmt wird.

27. Verfahren nach Anspruch 26, **dadurch gekennzeichnet, dass** die bestimmten NOₓ-Rohemissionswerte über Korrekturfelder für den Ladedruck, die EGR-Rate, die Drosselklappenstellung sowie den Beginn der Vor- und Haupteinspritzung und die Dauer der Voreinspritzung korrigiert werden.

28. Verfahren nach einem der vorhergehenden Ansprüche, **dadurch gekennzeichnet, dass** die NOₓ-Regeneration durch Teilandrosselung der Brennkraftmaschine (10) und/oder Erhöhung der EGR-Rate und/oder Senkung des Ladedrucks und/oder Anhebung der Vor- und/oder Nacheinspritzmenge und/oder Senkung der Haupteinspritzmenge gesteuert wird.

29. Verfahren nach Anspruch 28, **dadurch gekennzeichnet, dass** der Lambda-Wert in einer ersten Stufe durch Teilandrosselung der Brennkraftmaschine (10) und/oder Erhöhung der EGR-Rate und/oder Senkung des Ladedrucks zunächst auf einen vorbestimmten ersten Lambda-Schwellenwert abgesenkt und dann in einer zweiten Stufe durch Steuerung der Nacheinspritzung auf den endgültigen Regenerations-Lambda-Wert eingestellt wird.

30. Verfahren nach Anspruch 29, **dadurch gekennzeichnet, dass** der vorbestimmte Lambda-Schwellenwert 1,1 - 1,6 beträgt.

31. Verfahren nach Anspruch 30, **dadurch gekennzeichnet, dass** der vorbestimmte Lambda-Schwellenwert 1,3-1,5 beträgt.

32. Verfahren nach einem der Ansprüche 29 bis 31, **dadurch gekennzeichnet, dass** der vorbestimmte Regenerations-Lambda-Wert 0,75 bis 0,99 beträgt.

33. Verfahren nach Anspruch 32, **dadurch gekennzeichnet, dass** der Regenerations-Lambda-Wert 0,92 - 0,99 beträgt.

34. Verfahren nach Anspruch 29, **dadurch gekennzeichnet, dass** die Voreinspritzmenge in einer dritten Stufe auf 1 - 50 % der Haupteinspritzmenge angehoben wird.

35. Verfahren nach Anspruch 34, **dadurch gekennzeichnet, dass** die Voreinspritzmenge auf 5 - 20 % der Haupteinspritzmenge angehoben wird.

36. Verfahren nach einem der vorhergehenden Ansprüche, **dadurch gekennzeichnet, dass** auftretende Momentenänderungen durch Steuerung der Haupteinspritzmenge korrigiert werden.

37. Verfahren nach Anspruch 36, **dadurch gekennzeichnet, dass** die Momentenänderungen erst nach Überschreitung eines bestimmten Schwellenwertes korrigiert werden.

38. Verfahren nach einem der vorgehenden Ansprüche, **dadurch gekennzeichnet, dass** Unregelmäßigkeiten der Katalysatoraktivität durch Messung der Stickoxidemissionen mittels eines dem NOₓ-Speicherkatalysator (24) nachgeschalteten NOₓ-Sensors (38) und einen Vergleich dieser Messwerte mit berechneten Werten bestimmt werden.

39. Verfahren nach einem der vorgehenden Ansprüche, **dadurch gekennzeichnet, dass** der Beladungsschwellenwert für mehr als 30 s überschritten werden muss.

40. Verfahren nach Anspruch 39, **dadurch gekennzeichnet, dass** der Beladungschwellenwert bis zu einer NOₓ-Rohemission von 10 g/h einer Abweichung von 2 g/h zwischen Istwert und Sollwert entspricht, während er bei höheren NOₓ-Rohemissionen einer Abweichung von 20 % entspricht.

41. Verfahren nach einem der vorhergehenden Ansprüche, **dadurch gekennzeichnet, dass** nach Feststellung einer Unregelmäßigkeit der Katalysatoraktivität zumindest eine vorgezogene NOₓ-Regeneration durchgeführt wird.

42. Verfahren nach Anspruch 41, **dadurch gekennzeichnet, dass** zusätzlich zumindest noch eine De-Sulfatierung durchgeführt und danach bei Fortbestehen der Unregelmäßigkeit ein Katalysatordefekt signalisiert wird.

43. Verfahren nach Anspruch 41 oder 42, **dadurch gekennzeichnet, dass** die Anzahl der nach einer vorgezogenen NOₓ-Regeneration durchgeführten regulären NOₓ-Regenerationen bestimmt und mit einer vorbestimmten Mindestanzahl aufeinanderfolgender NOₓ-Regenerationen verglichen wird und dass beim Auftreten einer erneuten Unregelmäßigkeit der Katalysatoraktivität vor Erreichung dieser Mindestanzahl ein Katalysatordefekt signalisiert wird.

44. Verfahren nach Anspruch 43, **dadurch gekennzeichnet, dass** die Mindestanzahl aufeinanderfolgender regulärer NOₓ-Regenerationen 10 - 100 beträgt.

45. Verfahren nach Anspruch 44, **dadurch gekennzeichnet, dass** die Mindestanzahl aufeinanderfolgender regulärer NOₓ-Regenerationen 20 beträgt.

46. Verfahren zur Stickoxidreduzierung im Abgas einer mager betriebenen Brennkraftmaschine (10) mit einem nachgeschalteten NOₓ-Speicherkatalysator (24) durch:
Steuerung der NOₓ-Regeneration des NOₓ-Speicherkatalysators (24) nach einem der vorhergehenden Ansprüche; und
Begünstigung der NOₓ-Einlagerung zwischen einzelnen Regenerationsvorgängen durch abgastemperatursteigernde und/oder massenstromsenkende Maßnahmen, wobei diese Maßnahmen eine EGR-Änderung und/oder eine Drosselung der Frischluftmenge um bis zu 70 % und/oder eine Ladedrucksenkung bis hin zum reinen Saugbetrieb umfassen und wobei die Abgastemperatur vor dem NOₓ-Speicherkatalysator (24) auf einen Wert von mehr als 190 °C erhöht wird.

47. Common-Rail-Dieselmotor (10) mit einer vor einem Ansaugkrümmer angeordneten Drosselklappe (14), einem nachgeschalteten NOₓ-Speicherkatalysator (24) und einer Steuerungseinrichtung (36) zur Steuerung des Verfahrens nach einem der vorhergehenden Ansprüche.

48. Abgasreinigungsvorrichtung für eine Brennkraftmaschine (10) zur Durchführung des Verfahrens nach einem der vorhergehenden Verfahrensansprüche mit:
einem NOₓ-Speicherkatalysator (24);
einer dem NOₓ-Speicherkatalysator (24) vorgeschalteten Breitbandlambdasonde (26);
zumindest je einem dem NOₓ-Speicherkatalysator (24) vorgeschalteten bzw. nachgeschalteten Temperaturfühler (28, 30);
einem dem NOₓ-Speicherkatalysator (24) nachgeschalteten NOₓ-Sensor (38); und einer Steuerungseinrichtung (36) zur Erfassung der Messsignale der Breitbandlambdasonde (26), der Temperaturfühler (28,30) und des NOₓ-Sensors (38) und zur Steuerung des Verfahrens nach einem der vorhergehenden Ansprüche.

## Claims

1. Method for the NOₓ regeneration of an NOₓ storage catalyst (24) arranged downstream of an internal combustion engine (10) operated on a lean mixture, having the following method steps:
a.) determination of the state of loading of the NOₓ storage catalyst (24) with nitrogen oxides and comparison of the values for loading which have been determined with a predetermined first loading threshold value for a maximum permissible nitrogen oxide loading;
b.) on-board diagnosis of the NOₓ storage catalyst (24) for the purpose of detecting any irregularities in catalyst activity that may occur by determining NOₓ breakthroughs, which must exceed a certain breakthrough threshold value in a certain time window;
c.) checking the permissibility of NOₓ regeneration, when the first loading threshold value is exceeded or an irregularity in catalyst activity is detected, by checking the current driving situation for compliance with predetermined driving parameters and checking correct functioning of components relevant to safety, the components relevant to safety comprising an injection system and/or a throttle valve (14) and/or an EGR/boost pressure controller;
d.) checking whether the possibility of carrying out NOₓ regeneration is available through compliance with predetermined NOₓ regeneration parameters, setting the required NOₓ regeneration parameters if appropriate and initiating NOₓ regeneration if such a measure is permissible; and otherwise repeating method step c.) and, if appropriate, signalling a detected malfunction in one of the components relevant to safety; and
e.) carrying out NOₓ regeneration until a predetermined degree of NOₓ regeneration has been reached, setting normal operating conditions and returning to method step a.); or prematurely aborting or interrupting NOₓ regeneration if the current results of the permissibility check in method step c.) so require, returning to method step a.) or c.) and, if appropriate, signalling a detected malfunction of one of the components relevant to safety.

2. Method according to Claim 1, **characterized in that** the setting of the required regeneration parameters in method step d.) takes place only after a predetermined first time period has expired and/or at least a second loading threshold value for the nitrogen oxide loading has been exceeded.

3. Method according to Claim 1 or 2, **characterized in that**, after premature abortion or interruption of NOₓ regeneration, the state of loading of the NOₓ storage catalyst (24) with nitrogen oxides is determined and, if a predetermined degree of regeneration has not been reached, i.e. if a predetermined nitrogen oxide loading is exceeded, renewed NOₓ regeneration is initiated by a return to method step c.) while, if the predetermined degree of regeneration has been reached or exceeded, a return to method step a.) takes place.

4. Method according to Claim 3, **characterized in that** the predetermined degree of regeneration amounts to less than 5-15% residual loading relative to the state of loading upon initiation of NOₓ regeneration.

5. Method according to one of the preceding claims, **characterized in that** the NOₓ storage catalyst (24) is arranged downstream of a common-rail diesel engine.

6. Method according to one of the preceding claims, **characterized in that** the driving situation is derived from a threshold value for the pedal-value transmitter PWG and/or the injection quantity and/or the rotational speed and/or an overrun detection signal and/or a brake signal and/or a rotational-speed gradient.

7. Method according to one of the preceding claims, **characterized in that** NOₓ regeneration is carried out only if a certain minimum driving speed is exceeded.

8. Method according to Claim 7, **characterized in that** the minimum driving speed is 20 km/h.

9. Method according to one of the preceding claims, **characterized in that** NOₓ regeneration is carried out only in a certain rotational-speed or load range and in a certain range of load change requests or in a certain range of the alteration of a pedal-value transmitter over time (pedal-value transmitter speed).

10. Method according to Claim 9, **characterized in that** the rotational-speed range is 1200 - 3600 rpm, while the maximum alteration of the pedal-value transmitter over time (pedal-value transmitter speed) is < 100 %/s.

11. Method according to one of the preceding claims, **characterized in that** NOₓ regeneration is carried out only if the main injection quantity is 10-90% of the maximum value.

12. Method according to one of the preceding claims, **characterized in that** compliance with the required regeneration temperature is monitored by determining the exhaust-gas temperature upstream and/or downstream of the NOₓ storage catalyst (24).

13. Method according to one of the preceding claims, **characterized in that** an exhaust-gas temperature of 220-500°C is set in order to carry out NOₓ regeneration.

14. Method according to one of the preceding claims, **characterized in that** the exhaust-gas or catalyst temperature is controlled by adjusting the EGR rate and/or a throttle valve and/or the boost pressure controller and/or the afterinjection quantity and/or the time of afterinjection and/or the start of the main injection.

15. Method according to one of the preceding claims, **characterized in that** the preparation time required for the initiation of NOₓ regeneration and the actual regeneration period required to carry out NOₓ regeneration are determined and **in that** NOₓ regeneration is considered to be impermissible even if a predetermined maximum permissible preparation time and/or a maximum permissible regeneration period is/are exceeded.

16. Method according to Claim 15, **characterized in that** the maximum permissible regeneration period is 5 - 30 s.

17. Method according to Claim 16, **characterized in that** the maximum permissible regeneration period is 15 s.

18. Method according to one of the preceding claims, **characterized in that** no desulphatization or renewed NOₓ regeneration according to the invention is carried out within a predetermined minimum recovery time following proper completion or premature abortion or interruption of NOₓ regeneration according to the invention.

19. Method according to Claim 18, **characterized in that** the minimum recovery time is varied as a function of the preparation time required to initiate NOₓ regeneration and of the actual regeneration period required to carry out NOₓ regeneration.

20. Method according to Claim 18 or 19, **characterized in that** the minimum recovery time is 30 - 300 s.

21. Method according to Claim 20, **characterized in that** the minimum recovery time is 40 - 60 s.

22. Method according to one of the preceding claims, **characterized in that** the catalyst temperature is maintained after an interruption or premature abortion of NOₓ regeneration by attenuated temperature-maintaining measures and is lowered to normal operating values only after the expiry of a predetermined second time period.

23. Method according to Claim 22, **characterized in that** the predetermined second time period is 10 - 300 s.

24. Method according to Claim 23, **characterized in that** the predetermined second time period is 30 - 50 s.

25. Method according to one of the preceding claims, **characterized in that** the NOₓ storage activity or NOₓ emissions slippage when operating on a lean mixture is determined by means of the current state of loading of the NOₓ storage catalyst (24), the outflowing untreated NOₓ emissions, the exhaust-gas or catalyst temperature and the exhaust-gas mass flow.

26. Method according to Claim 25, **characterized in that** the untreated NOₓ emission level is determined by means of a characteristic map from consumption or engine operating points traversed (rotational speed n, current injection quantity M_E).

27. Method according to Claim 26, **characterized in that** the values determined for the untreated NOₓ emission level are corrected by means of correction maps for the boost pressure, the EGR rate, the throttle-valve position and the start of the pilot and the main injection and the duration of the pilot injection.

28. Method according to one of the preceding claims, **characterized in that** NOₓ regeneration is controlled by partial throttling of the internal combustion engine (10) and/or increasing the EGR rate and/or lowering the boost pressure and/or raising the pilot injection quantity and/or afterinjection quantity and/or lowering the main injection quantity.

29. Method according to Claim 28, **characterized in that** the lambda value is lowered initially to a predetermined first lambda threshold value in a first stage by partial throttling of the internal combustion engine (10) and/or increasing the EGR rate and/or lowering the boost pressure and is then set to the final regeneration lambda value in a second stage by controlling the afterinjection.

30. Method according to Claim 29, **characterized in that** the predetermined lambda threshold value is 1.1 - 1.6.

31. Method according to Claim 30, **characterized in that** the predetermined lambda threshold value is 1.3 - 1.5.

32. Method according to one of Claims 29 to 31, **characterized in that** the predetermined regeneration lambda value is 0.75 to 0.99.

33. Method according to Claim 32, **characterized in that** the regeneration lambda value is 0.92 - 0.99.

34. Method according to Claim 29, **characterized in that** the pilot injection quantity is raised in a third stage to 1 - 50% of the main injection quantity.

35. Method according to Claim 34, **characterized in that** the pilot injection quantity is raised to 5 - 20% of the main injection quantity.

36. Method according to one of the preceding claims, **characterized in that** changes in torque that occur are corrected by controlling the main injection quantity.

37. Method according to Claim 36, **characterized in that** the changes in torque are corrected only after a certain threshold value is exceeded.

38. Method according to one of the preceding claims, **characterized in that** irregularities in catalyst activity are determined by measuring nitrogen oxide emission levels by means of an NOₓ sensor (38) arranged downstream of the NOₓ storage catalyst (24) and comparison of these measured values with calculated values.

39. Method according to one of the preceding claims, **characterized in that** the loading threshold value must be exceeded for more than 30 s.

40. Method according to Claim 39, **characterized in that** the loading threshold value corresponds to a deviation of 2 g/h between the actual value and the desired value up to an untreated NOₓ emission level of 10 g/h while it corresponds to a deviation of 20% at higher untreated NOₓ emission levels.

41. Method according to one of the preceding claims, **characterized in that** at least one advanced NOₓ regeneration is carried out after an irregularity in catalyst activity is detected.

42. Method according to Claim 41, **characterized in that** at least one further desulphatization is carried out in addition and after this a catalyst defect is signalled if the irregularity persists.

43. Method according to Claim 41 or 42, **characterized in that** the number of regular NOₓ regenerations that is carried out after an advanced NOₓ regeneration is determined and compared with a predetermined minimum number of successive NOₓ regenerations, and **in that** a catalyst defect is signalled if another irregularity in catalyst activity occurs before this minimum number is reached.

44. Method according to Claim 43, **characterized in that** the minimum number of successive regular NOₓ regenerations is 10 - 100.

45. Method according to Claim 44, **characterized in that** the minimum number of successive regular NOₓ regenerations is 20.

46. Method for reducing nitrogen oxides in the exhaust gas of an internal combustion engine (10) operated on a lean mixture and having a downstream NOₓ storage catalyst (24) by:
controlling the NOₓ regeneration of the NOₓ storage catalyst (24) in accordance with one of the preceding claims; and
promoting NOₓ storage between individual regeneration operations by measures that raise the exhaust-gas temperature and/or lower the mass flow, these measures comprising alteration of the EGR and/or throttling the quantity of fresh air by up to 70% and/or lowering the boost pressure right down to pure natural aspiration, and the exhaust-gas temperature upstream of the NOₓ storage catalyst (24) being increased to a value of more than 190°C.

47. Common-rail diesel engine (10) with a throttle valve (14) arranged upstream of an intake manifold, a downstream NOₓ storage catalyst (24) and a control device (36) for controlling the method in accordance with one of the preceding claims.

48. Exhaust-gas purification device for an internal combustion engine (10) for carrying out the method in accordance with one of the preceding method claims, having:
an NOₓ storage catalyst (24);
a broad-band lambda probe (26) arranged upstream of the NOₓ storage catalyst (24);
at least one temperature detector (28) arranged upstream of the NOₓ storage catalyst (24) and at least one (30) arranged downstream of it;
an NOₓ sensor (38) arranged downstream of the NOₓ storage catalyst (24); and
a control device (36) for detecting the measurement signals of the broad-band lambda sensor (26), the temperature detectors (28, 30) and the NOₓ sensor (38) and for controlling the method in accordance with one of the preceding claims.

## Revendications

1. Procédé de régénération NOₓ d'un catalyseur à accumulation de NOₓ (24) branché en aval d'un moteur à combustion interne (10) fonctionnant sur un mélange pauvre, **caractérisé par** les étapes de procédé suivantes:
a.) détermination de l'état de charge en oxydes d'azote du catalyseur à accumulation de NOₓ (24) et comparaison des valeurs de charge déterminées à une première valeur de seuil prédéterminée d'une charge maximale admissible en oxydes d'azote;
b.) contrôle par le diagnostic embarqué (OBD - "On Board Diagnostic") du catalyseur à accumulation de NOₓ (24) pour constater d'éventuelles irrégularités de l'activité du catalyseur par détermination des émissions de NOₓ, qui doivent dépasser une valeur de seuil d'émission dans une fenêtre temporelle définie;
c.) en cas de dépassement de la valeur de seuil de la charge ou de constatation d'une irrégularité de l'activité du catalyseur, vérification de l'opportunité d'une régénération NOₓ en vérifiant si le mode de fonctionnement de composants concernés par la sécurité est correct, les composants concernés par la sécurité étant un système d'injection et/ou un clapet d'étranglement (14) et/ou le recyclage des gaz d'échappement (EGR - "Exhaust Gas Recycling") ou le turbocompresseur ;
d.) vérification s'il existe une possibilité de réaliser une régénération NOₓ en respectant des paramètres prédéterminés de régénération NOₓ, éventuellement avec réglage des paramètres nécessaires pour la régénération NOₓ et lancement de la régénération NOₓ si une telle disposition est opportune, sinon, répétition de l'étape de procédé
c.) et/ou éventuellement signalisation de la constatation des perturbations du fonctionnement d'un des composants concernés par la sécurité; et
e.) exécution de la régénération NOₓ jusqu'à obtention d'un degré prédéterminé de régénération NOₓ, réglage des conditions normales de fonctionnement et retour à l'étape de procédé a.), ou arrêt précoce ou interruption de la régénération NOₓ au cas où les résultats actuels de la vérification de l'opportunité de l'étape de procédé c.) l'exigent, retour à l'étape de procédé a.) ou c.) et éventuellement signalisation de la constatation d'une perturbation du fonctionnement d'un des composants concernés par la sécurité.

2. Procédé selon la revendication 1, **caractérisé en ce que** le réglage des paramètres nécessaires pour la régénération dans l'étape de procédé d.) ne s'effectue qu'après déroulement d'un premier laps de temps prédéterminé et/ou après dépassement d'au moins une deuxième valeur de seuil de la charge en oxydes d'azote.

3. Procédé selon la revendication 1 ou 2, **caractérisé en ce qu'**après l'arrêt précoce ou l'interruption de la régénération NOₓ, l'état de charge du catalyseur à accumulation de NOₓ (24) en oxydes d'azote est déterminée, et si un premier taux de régénération prédéterminé n'est pas atteint, c'est-à-dire si une charge en oxydes d'azote prédéterminée est dépassée, initialisation d'une nouvelle régénération NOₓ après retour à l'étape de procédé c.), tandis que si le taux de régénération prédéterminé est atteint ou dépassé, on retourne à l'étape de procédé a.)

4. Procédé selon la revendication 3, **caractérisé en ce que** le taux prédéterminé de régénération est inférieur à 5-15 % de charge résiduelle, calculé par rapport à l'état de charge lors du lancement de la régénération NOₓ.

5. Procédé selon l'une des revendications précédentes, **caractérisé en ce que** le catalyseur à accumulation de NOₓ (24) est raccordé en aval d'un moteur diesel à rampe d'injection commune.

6. Procédé selon l'une des revendications précédentes, **caractérisé en ce que** la situation de roulage est déduite d'une valeur de seuil de l'émetteur de pédale PWG et/ou de la quantité injectée et/ou de la vitesse de rotation et/ou d'un signal de détection de glissement et/ou d'un signal de freinage et/ou d'un gradient de vitesse de rotation.

7. Procédé selon l'une des revendications précédentes, **caractérisé en ce qu'**une régénération NOₓ n'est exécutée qu'en cas de dépassement d'une vitesse minimale définie.

8. Procédé selon la revendication 8, **caractérisé en ce que** la vitesse minimale est de 20 km/h.

9. Procédé selon l'une des revendications précédentes, **caractérisé en ce qu'**une régénération NOₓ n'est exécutée que dans une plage définie de vitesse de rotation ou de charge et dans une plage définie de souhaits de modification d'un émetteur de pédale (PWG de vitesse).

10. Procédé selon la revendication 9, **caractérisé en ce que** la plage de vitesse de rotation est de 1 200-3 600 min⁻¹, tandis que la variation temporelle maximale de l'émetteur de pédale (PWG de vitesse) est < 100%/s.

11. Procédé selon l'une des revendications précédentes, **caractérisé en ce qu'**une régénération NOₓ n'est réalisée que si la quantité injectée représente de 10-90% de la valeur maximale.

12. Procédé selon l'une des revendications précédentes, **caractérisé en ce que** le respect de la température nécessaire de régénération est surveillée par détermination de la température des gaz d'échappement en amont et/ou en aval du catalyseur à accumulation de NOₓ (24).

13. Procédé selon l'une des revendications précédentes, **caractérisé en ce que** pour réaliser une régénération NOₓ, on règle une température des gaz d'échappement de 220-500° C.

14. Procédé selon l'une des revendications précédentes, **caractérisé en ce que** la température des gaz d'échappement ou du catalyseur est commandée par réglage du taux de recyclage des gaz d'échappement (EGR) et/ou du turbocompressseur et/ou de la quantité d'injection secondaire et/ou de l'instant de l'injection secondaire et/ou du début d'injection de l'injection principale.

15. Procédé selon l'une des revendications précédentes, **caractérisé en ce que** la durée de préparation ou de chauffage nécessaire pour le réglage de la situation de régénération NOₓ et pour l'exécution d'une durée de régénération nécessaire pour la régénération NOₓ sont déterminées et **en ce qu'**après dépassement d'un instant maximum admissible de préparation et/ou d'une durée de régénération maximale admissible, la régénération NOₓ est considérée comme inopportune.

16. Procédé selon la revendication 15, **caractérisé en ce que** la durée maximale admissible de régénération est de 5-30 s.

17. Procédé selon la revendication 16, **caractérisé en ce que** la durée maximale admissible d'une régénération est de 15 s.

18. Procédé selon l'une des revendications précédentes, **caractérisé en ce qu'**aucune désulfuration ni aucune nouvelle régénération NOₓ selon l'invention n'est exécutée dans une durée prédéterminée minimale de répétition après qu'une régénération NOₓ selon l'invention s'est terminée correctement ou a été arrêtée précocement ou interrompue.

19. Procédé selon la revendication 18, **caractérisé en ce que** la durée minimale de répétition est sélectionnée de manière variable en fonction de la durée de préparation nécessaire pour le lancement de la régénération NOₓ et pour la durée de régénération nécessaire pour la régénération NOₓ proprement dite.

20. Procédé selon la revendication 18 ou 19, **caractérisé en ce que** la durée minimale de répétition est de 30-300 s.

21. Procédé selon la revendication 20, **caractérisé en ce que** la durée minimale de répétition est de 40-60 s.

22. Procédé selon l'une des revendications précédentes, **caractérisé en ce que** la température du catalyseur est maintenue après une interruption ou un arrêt précoce de la régénération NOₓ, par des dispositions d'atténuation qui maintiennent la température, et n'est abaissée aux valeurs normales de fonctionnement qu'après écoulement d'un deuxième laps de temps prédéterminé.

23. Procédé selon la revendication 22, **caractérisé en ce que** le deuxième laps de temps prédéterminé est de 10-300 s.

24. Procédé selon la revendication 23, **caractérisé en ce que** le deuxième laps de temps prédéterminé est de 30-50 s.

25. Procédé selon l'une des revendications précédentes, **caractérisé en ce que** l'activité d'accumulation des Noₓ ou la dérive des émissions de Noₓ en fonctionnement sur mélange pauvre sont déterminées à l'aide de l'état actuel de la charge en oxydes d'azote du catalyseur à accumulation de NOₓ (24), des émissions brutes de NOₓ, de la température des gaz d'échappement ou du catalyseur et du débit massique des gaz d'échappement.

26. Procédé selon la revendication 25, **caractérisé en ce que** les émissions brutes de Noₓ sont déterminées à l'aide d'un champ de caractéristiques découlant de la consommation ou des points où est passé le fonctionnement du moteur (vitesse de rotation n, quantité injectée M_E).

27. Procédé selon la revendication 26, **caractérisé en ce que** les valeurs déterminées des émissions brutes de Noₓ sont corrigées en fonction de la pression de suralimentation, du taux de recyclage des gaz d'échappement (EGR), de la position du clapet d'étranglement ainsi que du début de la pré-injection et de l'injection principale et de la durée de la pré-injection.

28. Procédé selon l'une des revendications précédentes, **caractérisé en ce que** la régénération NOₓ est commandée par un étranglement partiel du moteur à combustion interne (10) et/ou une augmentation du taux de recyclage des gaz d'échappement (EGR) et/ou un abaissement de la pression de suralimentation et/ou un relèvement de la quantité de pré-injection et/ou un relèvement de la quantité d'injection secondaire et/ou un abaissement de la quantité d'injection principale.

29. Procédé selon la revendication 28, **caractérisé en ce que** la valeur de lambda est d'abord abaissée à une première valeur de seuil de lambda prédéterminée par étranglement partiel du moteur à combustion interne (10) et/ou une augmentation du taux de recyclage des gaz d'échappement (EGR) et/ou un abaissement de la pression de suralimentation, et ensuite, dans une deuxième étape, est réglée à la valeur de lambda finale de la régénération par commande de l'injection secondaire.

30. Procédé selon la revendication 29, **caractérisé en ce que** la valeur de seuil prédéterminée de lambda est de 1,1-1,6.

31. Procédé selon la revendication 30, **caractérisé en ce que** la valeur de seuil prédéterminée de lambda est de 1,3-1,5.

32. Procédé selon l'une des revendications 29 à 31, **caractérisé en ce que** la valeur de lambda de la régénération est de 0,75-0,99.

33. Procédé selon la revendication 32, **caractérisé en ce que** la valeur de lambda de la régénération est de 0,92-0,99.

34. Procédé selon la revendication 29, **caractérisé en ce que** la quantité pré-injectée est relevée de 1-50% de la quantité de l'injection principale dans une troisième étape.

35. Procédé selon la revendication 34, **caractérisé en ce que** la quantité pré-injectée est relevée à 5-20% de la quantité de l'injection principale.

36. Procédé selon l'une des revendications précédentes, **caractérisé en ce que** d'éventuelles variations du couple sont corrigées par commande de la quantité de l'injection principale.

37. Procédé selon la revendication 36, **caractérisé en ce que** les variations de couple ne sont corrigées qu'après dépassement d'une valeur de seuil définie.

38. Procédé selon l'une des revendications précédentes, **caractérisé en ce que** des irrégularités de l'activité du catalyseur sont détectées par détermination des émissions de NOₓ au moyen d'un capteur de NOₓ (38) raccordé en aval du catalyseur à accumulation de Noₓ (24) et d'une comparaison de ces valeurs de mesure avec des valeurs calculées.

39. Procédé selon l'une des revendications précédentes, **caractérisé en ce que** la valeur de seuil de la charge doit être dépassée pendant plus de 30 s.

40. Procédé selon la revendication 39, **caractérisé en ce que** jusqu'à une émission brute de NOₓ de 10 g/h, la valeur de seuil correspond à un écart de 2 g/h entre la valeur effective et la valeur de consigne, tandis que pour des émissions brutes de NOₓ plus élevées, elle correspond à un écart de 20%.

41. Procédé selon l'une des revendications précédentes, **caractérisé en ce qu'**après constatation d'une irrégularité de l'activité du catalyseur, on effectue au moins une régénération précoce du NOₓ.

42. Procédé selon la revendication 41, **caractérisé en ce qu'**en supplément, on exécute encore au moins une désulfuration, et en cas de maintien des irrégularités, un défaut de catalyseur est signalé.

43. Procédé selon la revendication 41 ou 42, **caractérisé en ce que** le nombre des régénérations NOₓ régulières exécutées après une régénération NOₓ précoce est déterminé et est comparé à un nombre minimum prédéterminé de régénérations NOₓ successives, et en cas d'apparition d'une nouvelle irrégularité de l'activité du catalyseur avant l'atteinte de ce nombre minimum, un défaut de catalyseur est signalé.

44. Procédé selon la revendication 43, **caractérisé en ce que** le nombre minimum de régénérations de NOₓ régulières successives est de 10-100.

45. Procédé selon la revendication 44, **caractérisé en ce que** le nombre minimum de régénérations de NOₓ régulières successives est de 20.

46. Procédé de réduction des oxydes d'azote dans les gaz d'échappement d'un moteur à combustion interne (10) fonctionnant sur un mélange pauvre et dotée d'un catalyseur à accumulation de Noₓ (24), par les étapes consistant à :
- commander la régénération NOₓ du catalyseur à accumulation de Noₓ (24) selon l'une des revendications précédentes; et
- favoriser l'incorporation des Noₓ entre des opérations individuelles de régénération par des dispositions qui augmentent la température des gaz d'échappement et/ou des dispositions qui diminuent le débit massique, ces dispositions comportant une modification du recyclage des gaz d'échappement (EGR) et/ou un étranglement de la quantité d'air frais allant jusqu'à 70% et/ou un abaissement de la pression de suralimentation jusqu'à un fonctionnement en pure aspiration, la température des gaz d'échappement en amont du catalyseur à accumulation de Noₓ (24) étant augmentée jusqu'à une valeur supérieure à 190°C.

47. Moteur diesel (10) à rampe d'injection commune, avec en amont d'un coude d'aspiration un clapet d'étranglement (14), un catalyseur à accumulation de NOₓ (24) branché en aval et un dispositif de commande (36) pour la commande du procédé selon l'une des revendications précédentes.

48. Dispositif d'épuration de gaz d'échappement pour un moteur à combustion interne (10) en vue de la réalisation du procédé selon l'une des revendications précédentes concernant le procédé, comprenant:
- un catalyseur à accumulation de NOₓ (24);
- une sonde lambda à large bande (26) branchée en amont du catalyseur à accumulation de NOₓ (24);
- au moins une sonde de température (28, 30) branchée chaque fois en amont et en aval du catalyseur à accumulation de NOₓ (24);
- un capteur de NOₓ (38) branché en aval du catalyseur à accumulation de NOₓ (24); et
- un dispositif de commande (36) pour la saisie des signaux de mesure de la sonde lambda à large bande (26), des sondes de température (28, 30) et du capteur de NOₓ (38) et pour la commande du moteur à combustion interne par l'un des procédés selon l'une des revendications précédentes.
